# EUROPEAN PATENT SPECIFICATION

(11) **EP 1 783 104 B1**
(45) Date of publication and mention of the grant of the patent: **15.06.2011**
(21) Application number: 05256683.3
(22) Date of filing: 27.10.2005
(51) Int. Cl.: C03B 37/014

(54) **Method of producing a preform for optical fibers**
Verfahren zur Herstellung einer Vorform für optische Fasern
Procédé de fabrication d'une préforme pour fibres optiques

(43) Date of publication of application: 09.05.2007
(73) Proprietor: Sterlite Technologies Limited, Aurangabad 431136 MAH (IN)
(72) Inventor: Gupta, Kaushal, Aurangabad, Maharastra (IN); Dayanandan, Sreena, Aurangabad, Maharastra (IN); Ranjan Sahu, Manas, Aurangabad, Maharastra (IN); Ahmed, Koilakh, Aurangabad, Maharastra (IN); Ranjan Sahu, Hrudaya, Aurangabad, Maharastra (IN)
(74) Representative: Neigenfink, Jan Cornelius

(56) References cited:
- WO-A-03/011779
- WO-A-2005/063638
- US-B1- 6 477 305

## Description

### BACKGROUND OF THE INVENTION:

### Field of the invention:

The present invention relates to a method of preparing low attenuation single mode fiber and particularly to the preparation of optical fiber preform from which single mode optical fiber is drawn and shows low transmission loss in the 1360 to 1460 nm (E-band) wavelength region.

Conventional single mode optical fiber can be utilized for data transmission in the wavelength region ranging between 1300 nm to about 1600 nm region. However in these single mode fibers the data transmission is carried out at the 1310 nm (O-band) and 1550 nm (C-band) wavelength region. The reason for not using the 1360-1460 nm (E-band) region for the data transmission in this standard single mode fiber is due to the high attenuation loss at 1380 nm of the signal during transmission. The high attenuation of the transmitted signal is due to a high absorption band in this region owing to the presence of moisture (OH ions) in the fiber core. Due to high network capacity growth, the need for the utilization of the entire wavelength in the region 1200 nm to about 1600 nm becomes necessary.

Thus the single mode fiber that can be used in the transmission of signal in the E-band will be the one with no absorption band at this wavelength region. The other way of putting the statement is the fiber with no OH ions in the fiber core region is suitable for transmission of signal in the E-band with acceptable power loss.

The present invention seeks to provide a method for preparation of single mode optical fiber with low loss in the E-band, in particular, a method for preparation of optical fiber preform that exhibits very low OH ions in core region to produce low OH single mode optical fiber.

### Description of the prior art:

Conventional methods employed in manufacturing single mode optical fibers like MCVD (Modified Chemical Vapor Deposition), OVD (Outside Vapor Deposition) or VAD (Vapor Axial Deposition) process results in optical fibers with a high attenuation peak centered around the 1380 nm region (E-band). With the need for optical fibers that can be utilized in the entire wavelength region of 1200 nm to about 1600 nm, development of a process for preparing optical fibers with very low OH ion concentration in the fiber core region has been a challenge for all optical fiber manufacturers.

The various approaches undertaken by the optical fiber manufacturers to meet the objective of preparing optical fiber with no absorption band at 1380 nm wavelength region has been centered on the stopping of the inclusion of hydrogen or hydrogen containing compounds into the core region of the optical fiber preform.

U.S. patent 6,477,305 describes a method for manufacturing low water peak optical waveguide. In a first preferred embodiment of the method of the invention, exposure of the centerline hole to an atmosphere containing a hydrogen compound is prevented following the steps of chemically drying and consolidating the porous body. In accordance with this embodiment, the centerline hole does not have an opportunity to rewet prior to centerline hole closure. The second embodiment of this prior art is a method whereby water contained within the portion of the sintered solid glass body surrounding the centerline hole as a result of rewetting following consolidation is chemically removed from glass prior to centerline hole closure, preferably at draw.

In accordance with the first embodiment, the closing step comprises of closing both ends of the porous body with plugs either during or following the consolidation step and heating said porous body in an inert gas atmosphere to sinter both the ends of the porous body with plugs thereby sealing the centerline hole and to diffuse the inert gas from the sealed centerline hole. After consolidation, either the formed glass body is heated in a furnace to draw into core cane or breaking the at least one said plug to expose the centerline hole to a reduced pressure atmosphere before heating the glass body in a furnace to draw in to core cane.

In accordance with the first preferred embodiment of US patent 6,477,305, the said centerline hole in plugged at one end and inserted inside heating furnace to consolidate the porous body with plug to seal one end. Following consolidation step, the sintered preform is withdrawn from hot zone to connect vacuum at another end and sintered solid glass body is again inserted inside hot zone to form solid sintered solid glass body. This preform is processed later on to form optical fiber.

The above U.S. patent 6,477,305 method found having the following disadvantages:
a) the process fabrication time will be adversely high due to both sintering and closing the entire centerline hole is done separately;
b) physical deformation of preform will occur during sintering and closing the entire centerline hole inside the furnace needs higher temperature than sintering temperature;
c) handling the preform step is very complex due to plugging both side to seal the centerline hole to prevent OH ions and breaking plug at one end to expose to vacuum;
d) more complexity in process control and higher process time due to several process step involved like chemically removing the water contained inside the centerline hole of consolidated preform.

Further, WO2005/063638 discloses a process for producing a low-attenuation optical fiber. The process as disclosed comprises producing a soot core preform by chemical deposition on a substrate. The substrate is then removed from the soot core preform, thereby forming a central hole along the soot preform. The soot core preform is dried and consolidated in a consolidation furnace to form a glass core preform. The glass preform is heated in the consolidation furnace over a glass melting temperature to produce a reduction of the diameter of the central hole and the glass core preform is stretched to completely close the central hole.

In the process as disclosed in WO2005/063638, a complete closure of the center hole is achieved in two steps viz, the diameter of the central hole is first partially reduced during consolidation, and then the consolidated preform is stretched to have completely closed central hole, which at least would amount to longer fabrication time.

In another application, WO03011779, a method of fabricating an optical waveguide fiber from a preform having a centerline aperture is disclosed. According to the disclosure, the method includes reducing the pressure in the centerline aperture, then increasing the pressure in the centerline aperture to a pressure in order to improve uniformity, circularity, and/or symmetry around the centerline aperture region.

Further, in the method as disclosed in WO03011779, the step of consolidation and the step of collapsing is performed one after the other. Further, during the step of consolidation, the centerline hole is partially closed by exposing the consolidated preform to first pressure and then in the second stage, when the centerline aperture is subjected to a second pressure, the centerline aperture is fully closed. The aforementioned process again results in at least longer fabrication time.

Notwithstanding a desire to provide a method for preparation of optical fiber for signal transmission in the wavelength region of about 1260 nm to about 1625 nm region a method of preparation of such single mode optical fiber is disclosed. What is sought after and what seemingly has not yet appeared in the prior art is an optical fiber preparation step that can be employed to overcome the above drawbacks.

According to the present invention there is provided a method of manufacturing a solid glass preform for use in manufacturing low OH single mode optical fiber, said method comprising the steps of:
a) simultaneous oxidizing and hydrolyzing of the glass-forming precursors compounds to form porous silica based materials,
b) depositing said porous silica based materials on a hollow tapered cylindrical member to form soot porous body,
c) rotating cylindrical member with predetermined speed for depositing said silica based materials,
d) detaching said cylindrical member from the said soot porous body thereby resulting in a hollow cylindrical soot porous body (soot porous body),
e) dehydrating said soot porous body and,
f) sintering and collapsing simultaneously of said soot porous body inside the same furnace to form a solid glass preform suitable to make optical fiber.

The optical fiber preform manufactured following preferred embodiments of the present invention seek to produce optical fiber that can transmit signal at entire wavelength in the wavelength region between about 1260 nm to about 1625 nm with minimal loss. Additionally, the optical fiber preform fabrication according to preferred embodiments of the present invention allows making larger size preform capable to produce low OH single mode optical fiber with excellent productivity and low costs.

In a first preferred embodiment of the method of the present invention, drying process is carried out in drying gas atmosphere, sintering and collapsing process of the soot porous body is disclosed. According to the preferred embodiment, sintering stands for converting the soot porous body in to glass body and collapsing stands for completely vanishing out the hollow space at the center of soot porous body thereby creating solid glass body (hereinafter solid glass preform). The said sintering and collapsing is carried out in a single step in the same furnace simultaneously to form solid glass preform by generating negative pressure (lesser than atmosphere) on one side the hollow soot porous body with inserting glass frustum at another end of said soot porous body.

In a second preferred embodiment of the method of the present invention, rotating the said soot porous body with negative pressure inside the hollow soot porous body to achieve uniform diameter of the solid glass preform while sintering and collapsing of the said soot porous body is disclosed. The solid glass preform is either directly drawn into optical fiber or drawn in to core rod for over cladding to form solid glass preform which further drawn in to optical fiber. The optical fiber drawn from above methods exhibits low transmission loss in the range 1360 to 1460 nm (E-band) wavelength region.

The present invention seeks to provide a method of preparing optical fiber preform and more precisely optical fiber preform that is used for the manufacture of the optical fiber having optical loss less than 0.4 dB/Km in the wavelength region 1360 to 1460 nm and the attenuation value less than 0.4 dB/km at a wavelength of 1380 nm.

Preferred embodiments of the present invention seek to provide a method of preparation of optical fiber preform and more precisely optical fiber preform that can be used for the manufacture of the optical fiber having optical loss less than 0.4 dB/Km in the wavelength region 1360 to 1460 nm and the attenuation value less than 0.4 dB/km at a wavelength of 1380 nm. Preferred embodiments seek to achieve this by the inventive step of simultaneous sintering and collapsing of the soot porous body into a solid glass preform.

Preferred embodiments of the present invention seek to provide reduction of the overall preform process time. This is achieved during the soot porous body sintering and collapsing step when carried out simultaneously.

Preferred embodiments of the present invention seek to provide the generation and maintaining the required negative pressure inside the hollow space of soot porous body during the simultaneous sintering and collapsing of the soot porous body. The collapsing process is carried out by generation of required negative pressure while exposing the soot porous body to a temperature more preferably greater than 1500 deg. C. The negative pressure is achieved by vacuum generator and sealing mechanism and as discussed in the specification. The sealing mechanism not only acts as a link between the hollow space of soot porous body and the vacuum generator but also facilitates the rotation of the soot porous body while the negative pressure is maintained in the hollow space of soot porous body.

Preferred embodiments of the present invention relate to making the soot porous body by using atmospheric chemical vapor deposition and dehydrating, sintering and collapsing the same soot porous body inside the same furnace to form a solid glass perform.

A preferred arrangement of the present invention specifically describes that the soot porous body sintering and collapsing process is carried out inside the furnace simultaneously.

In a preferred arrangement of the present invention, the said sintering and collapsing step is carried out simultaneously by generating required negative pressure (less than atmospheric pressure) from one side of the hollow soot porous body and inserting glass frustum at another end of said soot porous body.

Preferred arrangements of the present invention seek to achieve the solid glass preform without any physical deformation with the help of rotation while carrying out the sintering and collapsing step simultaneously inside the furnace along with generating required negative pressure inside the hollow soot porous body.

Further aspects of preferred arrangements of the present invention include, generating required negative pressure inside the soot porous body while rotation to remove the last trace of OH ions inside core region and to facilitate to collapse the soot porous body.

In a preferred embodiment of the present invention, the sealing mechanism apparatus design is to maintain the required negative pressure inside the soot porous body and to enable to rotate the soot porous body.

Accordingly, embodiments of the present invention seek to achieve the above objectives and a method of manufacturing a solid glass preform for use in manufacturing low OH optical fiber, said method comprising the steps of a) simultaneous oxidizing and hydrolyzing of the glass-forming precursors compounds to form porous silica based materials, b) depositing of the said porous silica based materials on a hollow tapered cylindrical member to form soot porous body; c) detaching of the said cylindrical member from the said soot porous body thereby resulting in a hollow cylindrical soot porous body; d) dehydrating, sintering and collapsing the said hollow cylindrical soot porous body to form a solid glass preform suitable to make optical fiber and said sintering and collapsing steps are carried out simultaneously in a single heating furnace, and f) said hollow cylindrical soot porous body undergoing by said sintering and collapsing step is never allowed the furnace temperature below 1000 deg. C until the collapsing step is completed.

Other features of the present invention will be more readily understood from the following detailed description of preferred embodiments thereof when read in conjunction with the accompanying drawings.

### BRIEF DESCRIPTION OF THE DRAWINGS:

The nature of the present invention is described with the help of accompanied figures, which are incorporated with a view to demonstrate the invention and its best mode of operation and are not intended to limit the scope of the present invention.
Figure 1 shows the optical fiber preform manufacturing steps in accordance with the preferred embodiments of the present invention.
Figure 2 shows the cross section view of the hollow soot porous body according to preferred embodiments of the present invention.
Figure 3 shows the refractive index profile of the glass core rod according to preferred embodiments of the present invention.
Figure 4 shows the optical fiber attenuation profile prepared from the core rode prepared according to preferred embodiments of the present invention.
Figure 5 shows the setup of the soot porous body inside the furnace, and the sealing mechanism arrangement apparatus to generate vacuum inside the soot porous body, which forms solid glass preform suitable to obtain optical fiber according to preferred embodiments of the present invention.

### DESCRIPTION OF PREFERRED EMBODIMENTS OF THE PRESENT INVENTION:

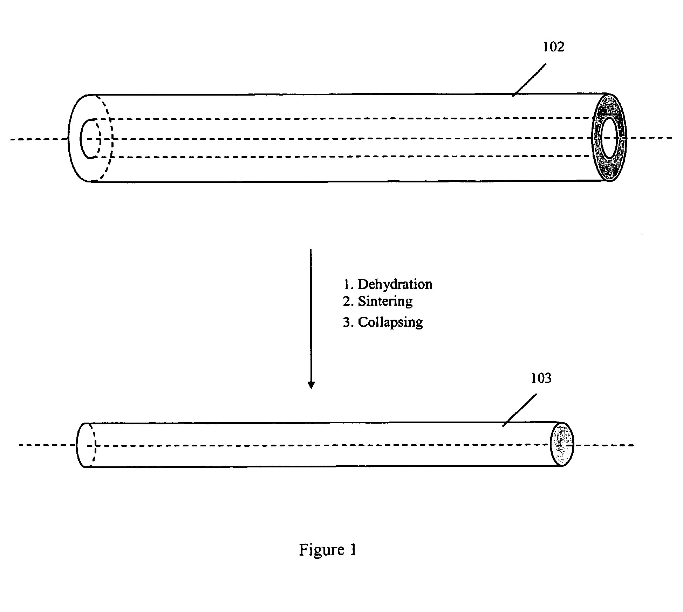

The process for fabricating low OH optical fiber having low optical loss in the wavelength region of about 1360 to 1460 nm starts with the preparation of a hollow cylindrical soot porous body 102, made of glass forming soot material, by atmospheric chemical vapor deposition method (Figure 1).

The preparation of hollow cylindrical soot porous body 102 comprising the following steps. The glass-forming precursors compounds is oxidized and hydrolyzed to form porous silica based materials. The porous silica based materials are deposited on a hollow tapered cylindrical member to form soot porous body. During the deposition process, the cylindrical member is rotated with higher rotation speed preferably above 150 rpm at initial deposition layers. After completion of predetermined layer deposition, the rotation speed is reduced preferably below 150 rpm. The rotation speed at the initial layers is crucial since uniform deposition on the cylindrical member is improved with higher rotation speed. Uniform surface interface between the cylindrical member and the soot is necessary to accomplish the sintering and collapsing process simultaneously to form a solid glass preform without any physical defects which is well known to person skilled in this art.

After completion of deposition, cylindrical member is detached from the soot porous body thereby resulting in a hollow cylindrical soot porous body (hereinafter referred to as soot porous body). The soot porous body comprises of core region 106 and clad region 105 of an optical fiber and said core region 106 has refractive index greater than the clad region 105.

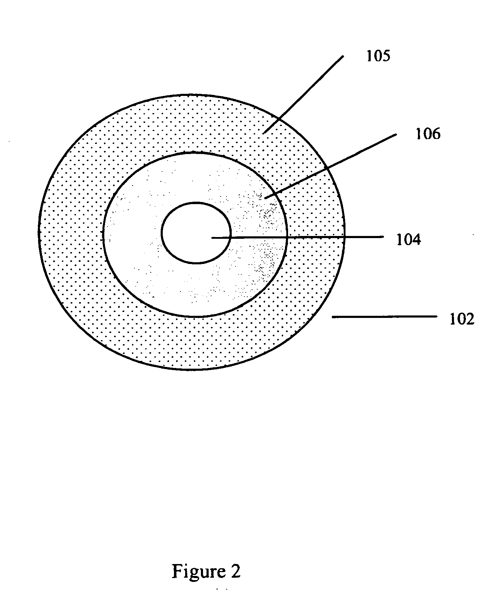

The cross section view of the soot porous body 102 is shown in figure 2. After detachment of cylindrical member hollow space 104 is created inside the soot porous body 102. The amount of deposition of the clad region 105 and core region 106 is prepared in such a way that the ratio of clad region 105 and core region 106 is always above 4.

The prepared soot porous body 102 is transferred to the sintering furnace 110 in order to dehydrating, sintering and collapsing the said soot porous body 102 to form a solid glass preform 103. Thus prepared soot porous body 102 is dehydrated, sintered and collapsed in the subsequent step to convert the soot porous body 102 into solid glass preform 103.

The collapsing process of soot porous body 102 is carried out by generating a negative pressure inside the hollow portion 104 of the soot porous body 102 at furnace temperature above 1500 deg. C to form the solid glass preform 103. The solid glass preform 103 prepared by following the step as per the present invention is either directly drawn in to optical fiber or drawn into core rod. The prepared core rod is overcladded with cladding material to form the optical fiber preform. The optical fiber preform forms the base material from which the optical fiber is drawn. The optical fiber thus drawn as prepared by the present invention shows low optical loss less than 0.4 dB/km in the wavelength region of about 1360 to 1460 nm.

In a preferred embodiment of the present invention, the dehydration, sintering and collapsing step is carried out such that the glass body temperature is never less than 1000 deg. C.

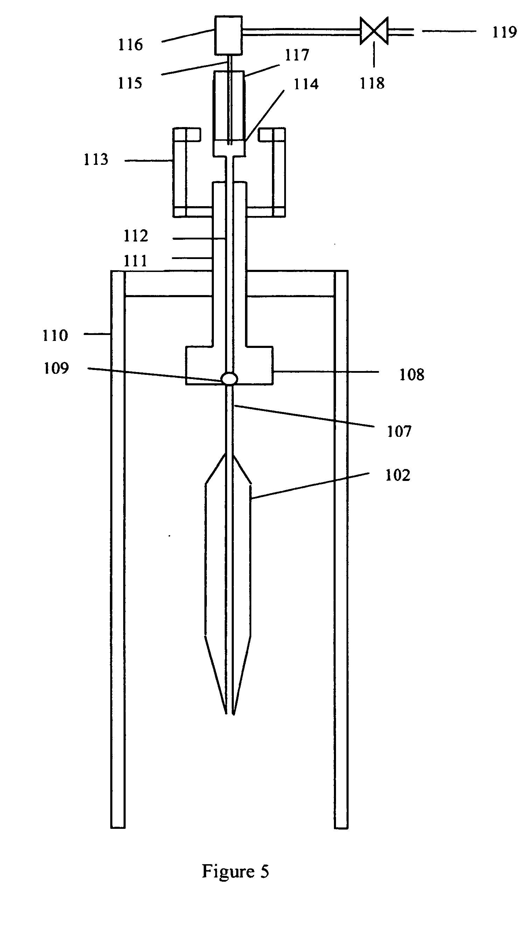

The soot porous body 102 inside the furnace setup 110 is as shown in figure 5. The said soot porous body 102 supported with handle rod 107, is mounted with the help of ball 109 on the glass feed handle 108 which is connected with the glass assembly rod 111 and 112 which will be able to rotate whole soot porous body setup with the help of provided rotating coupler 113 which is attached with rotator (not shown). The rotator accomplishes rotation of the soot porous body with predetermined speed. There is a connection mechanism between the edge of handle rod 107 and the glass assembly rod 112. The glass assembly rod 112 is attached with larger glass body 114, a stainless steel (SS) coupler 117, and SS pipe arrangement 115 is connected to the sealing mechanism unit 116 and the same is connected to either the manual valve or actuator valve 118 to generate negative pressure inside the hollow soot porous body through vacuum generator 119, which is not shown. In order to achieve the required pressure inside the hollow soot porous body, the whole apparatus setup is made.

The configuration/design of sealing mechanism unit 116 is made in such a way so as to generate required negative pressure inside the hollow soot porous body and to be able to rotate the whole assembly from SS pipe arrangement 115, coupler 117, larger glass body 114**,** glass assembly rod 111 & 112**,** glass feed handle 108**,** handle rod 107 and to the soot porous body 102. In order to generate negative pressure on one side of the hollow soot porous body, another end of the body is closed with glass frustum before feeding the said soot porous body inside the furnace. The glass frustum may not be necessarily high purity quartz glass.

The soot porous body 102 is fed inside the furnace 110. Inside the furnace 110, two hot zone regions are provided (not shown). First hot zone is provided for dehydration and second hot zone is provided for sintering and collapsing step. The soot porous body 102 is kept under the temperature range between 1000 deg. C to 1200 deg. C (first hot zone) in order to dehydrate said soot porous body 102. Drying gas and inert gas preferably chlorine and helium is provided inside the furnace 110, which enables the removal of OH ions in the soot porous body 102 during dehydration step to exhibit very low OH ions core region. During the said dehydration step, the soot porous body 102 is kept at the same place inside the furnace for predetermined time. The soot porous body 102 may or may not be rotated during dehydration.

After completion of dehydration process, the soot porous body 102 is moved inside the second hot zone region of furnace with predetermined descending speed. Second hot zone region is kept above 1500 deg. C in order to sinter and collapse the said soot porous body 102**.** The sintering and collapsing step is carried out simultaneously with rotation and generating negative pressure inside the soot porous body 102 to form solid glass preform 103 inside the inert gas medium preferably helium. The sintering and collapsing process may be carried out along with drying gas medium preferably chlorine. A driving force is required in order to remove the last trace of OH ions inside the core region during sintering and collapsing step. A vacuum generator 119 is provided to generate driving force inside the soot porous body 104 with the help of sealing mechanism unit 116 while rotation of soot porous body 102.

The said solid glass preform 103 is either directly drawn into optical fiber or drawn in to core rod and then it is overcladded with cladding material to form optical fiber preform from which the optical fiber is drawn. According to present invention, the prepared glass solid preform or core rod is not necessary to etch the surface of core rod to remove the OH ions on the surface by using plasma or chemical etching as done normally in conventional method. And before over cladding the core rod with cladding material, the core rod is fire polished with low temperature preferably below 1800 deg. C so that OH ions does not diffuse inside the core rod. The prepared optical fiber according to preferred embodiments of the present invention shows the optical loss less than 0.4 dB/Km in the wavelength region 1360 to 1460 nm.

The sintering and collapsing steps occurs simultaneously inside the furnace 110, probability of OH ions exposure is totally eliminated and thus OH ions presence inside the core is prevented and moreover the above step is carried out simultaneously with rotation which thus help to get physically uniform dimension of the solid glass perform 103 and exhibiting without any physical defects. A person skilled in the art knows that achieving uniform dimension and without any physical defects is necessary to carry out the next process step without any problem.

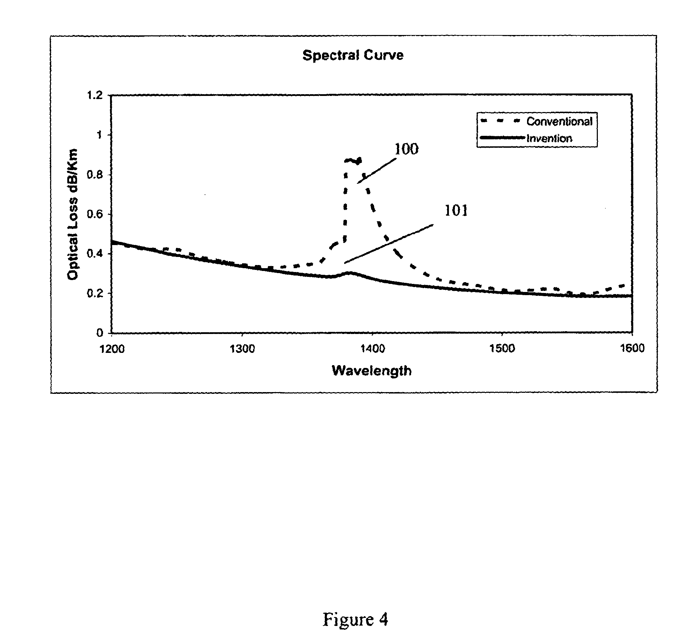

The spectral attenuation plot of the fiber is shown in the figure 4. The attenuation plot of the fiber of the prior art 100 and another plot 101 is in accordance with the present invention. As evident from the figure 4 the treatment of the fiber in accordance with preferred embodiments of the present invention leads to fiber with attenuation value at 1380 nm to be less than at 1300 nm. The low attenuation in the 1380 nm region is due to the very low OH absorption loss.

The chromatic dispersion value of the optical fiber and its dependence on the wavelength is found to be similar to that of conventional single mode fiber. The optical fiber prepared according to preferred embodiments of the present invention has cutoff wavelength less than 1300 nm and more preferably less than 1260 nm.

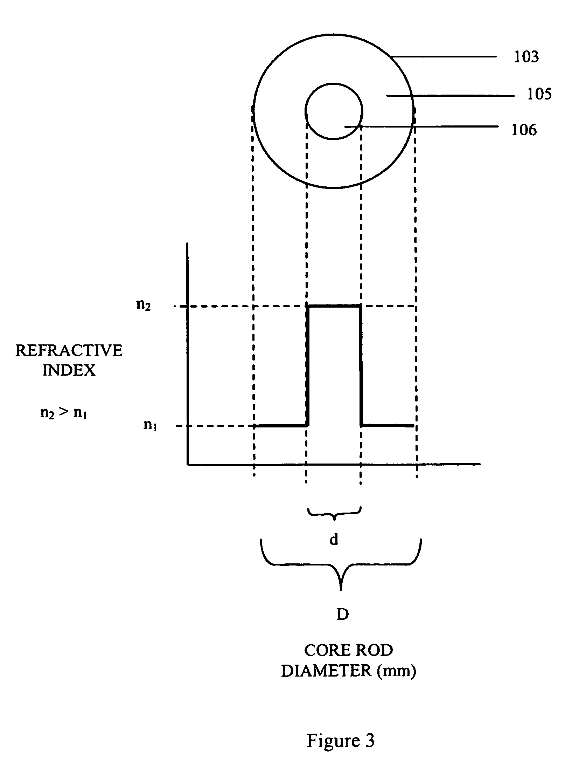

The cross sectional view of the sintered solid glass preform 103 is shown in the figure 3. The solid glass preform 103 consists of a cladding portion 105 that surrounds the core portion 106. The core portion soot porous body constitutes glass-forming materials doped with refractive index modifying dopant. The refractive index modifying dopant can be GeO2 that increase the refractive index of the glass forming material.

The refractive index profile of the core rod thus prepared as per the present embodiment is shown in figure 3. The refractive index value of the core portion n2 and that of the cladding portion n1 are such that n2 > n1 i.e. the refractive index of the core portion of the core rod is greater than the cladding portion of the core rod. The cross sectional variation of the refractive index value of the core rod as shown in the figure 3 shows that of a typical step type index profile. However the present embodiment relates to methodology of preparation of single mode fiber and removal of the OH ions from the fiber core.

## Claims

1. A method of manufacturing a solid glass preform (103) for use in manufacturing low OH single mode optical fiber, said method comprising the steps of:
simultaneous oxidizing and hydrolyzing of the glass-forming precursors compounds to form porous silica based materials,
rotating a hollow tapered cylindrical member with predetermined speed and depositing said porous silica based materials on the hollow tapered cylindrical member to form soot porous body (102),
detaching the cylindrical member from the soot porous body (102) thereby resulting in a hollow cylindrical soot porous body (soot porous body),
dehydrating the soot porous body (102) in a furnace (110) between a temperature range of 1000 °C to 1200 °C and
generating a negative pressure inside the soot porous body (102) simultaneously sintering and collapsing the soot porous body (102) inside the same furnace (110) to form a solid glass preform (103) suitable to make optical fiber.

2. The method according to claim 1, wherein said solid glass preform (103) is either directly drawn into optical fiber or drawn into core rod and is then overcladded to form optical fiber preform from which optical fiber is drawn.

3. The method according to claim 1, wherein said rotation speed of cylindrical member for certain initial deposition layers is preferably above 150 rpm and more preferably above 180 rpm and later said rotation speed is reduced preferably below 150 rpm.

4. The method according to claim 1, wherein said sintering and collapsing of the said soot porous body (102) is carried out simultaneously in the same furnace (110) at a temperature greater than 1500 °C until collapsing step completes to form a solid glass preform (103).

5. The method according to claim 4, wherein said collapsing of the soot porous body (102) is accomplished by using a vacuum generator (119) for generating negative pressure on one side of the hollow region of soot porous body (104) and inserting glass frustum at another end of said soot porous body (102).

6. The method according to claim 5, wherein said sintering and collapsing process steps is accomplished by using a sealing mechanism apparatus to maintain the required negative pressure inside hollow region of soot porous body (104).

7. The method according to claim 6, wherein during said sintering and collapsing steps, said soot porous body (102) is rotated with predetermined speed.

8. The method according to claim 1, said sintering and collapsing of soot porous body (102) comprising steps of:
inserting a glass frustum at one end of the soot porous body (102),
heating the soot porous body (102) above 1500 °C,
rotating the soot porous body (102) with predetermined speed,
connecting a vacuum generator (119) at another end of the soot porous body (102),
generating required negative pressure inside the soot porous body (104),
inserting said soot porous body (102) inside the hot zone of heating furnace (110) with predetermined descending speed and
collapsing said soot porous body (102) to form a solid glass preform (103).

## Patentansprüche

1. Verfahren zur Herstellung einer Vorform (103) aus massivem Glas zur Verwendung bei der Herstellung von optische Einmodenfasern mit geringem OH-Gehalt, wobei das Verfahren folgende Schritte umfasst:
gleichzeitige Oxidation und Hydrolyse der glasbildenden Vorläuferverbindungen zur Ausbildung poröser Materialien auf der Basis von Siliciumdioxid,
Drehen eines hohlen, sich verjüngenden, zylindrischen Elements mit vorab festgelegter Geschwindigkeit und Ablagerung der porösen Materialien auf der Basis von Siliciumdioxid auf dem hohlen, sich verjüngenden, zylindrischen Element zur Ausbildung eines porösen Rußkörpers (102),
Lösen des zylindrischen Elements von dem porösen Rußkörper (102), so dass sich ein hohler zylindrischer poröser Rußkörper (poröser Rußkörper) ergibt,
Dehydratisieren des porösen Rußkörpers (102) in einem Ofen (110) in einem Temperaturbereich von 1000 °C bis 1200 °C und
Erzeugen eines Unterdrucks im Inneren des porösen Rußkörpers (102) und gleichzeitig Sintern und Zusammenfallen des porösen Rußkörpers (102) in demselben Ofen (110) zur Ausbildung einer für die Herstellung einer optischer Faser geeigneten Vorform (103) aus massivem Glas.

2. Verfahren nach Anspruch 1, wobei die Vorform (103) aus massivem Glas entweder direkt zu optischer Faser gezogen wird oder zu einem Kernstab gezogen und dann ummantelt wird, um eine Vorform für optische Faser auszubilden, aus der optische Faser gezogen wird.

3. Verfahren nach Anspruch 1, wobei die Drehzahl des zylindrischen Elements für bestimmte anfängliche Ablagerungsschichten vorzugsweise über 150 rpm und bevorzugter über 180 rpm liegt und die Drehzahl später vorzugsweise unter 150 rpm vermindert wird.

4. Verfahren nach Anspruch 1, wobei das Sintern und Zusammenfallen des porösen Rußkörpers (102) gleichzeitig in demselben Ofen (110) bei einer Temperatur von mehr als 1500 °C erfolgt, bis der Schritt des Zusammenfallens abgeschlossen ist, um eine Vorform (103) aus massivem Glas auszubilden.

5. Verfahren nach Anspruch 4, wobei das Zusammenfallen des porösen Rußkörpers (102) durch die Verwendung eines Vakuumerzeugers (119) zur Erzeugung von Unterdruck auf einer Seite des hohlen Bereichs des porösen Sootkörpers (104) und die Einführung eines Glasstumpfes an einem anderen Ende des porösen Sootkörpers (102) erreicht wird.

6. Verfahren nach Anspruch 5, wobei die Verfahrensschritte des Sinterns und Zusammenfallens durch die Verwendung eines Geräts mit Dichtungsmechanismus erreicht werden, um den erforderlichen Unterdruck im Inneren des hohlen Bereichs des porösen Rußkörpers (104) aufrechtzuerhalten.

7. Verfahren nach Anspruch 6, wobei der poröse Rußkörper (102) während der Schritte des Sinterns und Zusammenfallens mit vorab festgelegter Geschwindigkeit gedreht wird.

8. Verfahren nach Anspruch 1, wobei das Sintern und Zusammenfallen des porösen Rußkörpers (102) folgende Schritte umfasst:
- Einführen eines Glasstumpfes an einem Ende des porösen Rußkörpers (102),
- Erhitzen des porösen Rußkörpers (102) über 1500 °C,
- Drehen des porösen Rußkörpers (102) mit vorab festgelegter Geschwindigkeit,
- Anschließen eines Vakuumerzeugers (119) an einem anderen Ende des porösen Ruhkörpers (102),
- Erzeugen des erforderlichen Unterdrucks im Inneren des porösen Rußkörpers (102),
- Einführen des porösen Rußkörpers (102) in die heiße Zone des Heizofens (110) mit vorab festgelegter, nachlassender Geschwindigkeit und
- Zusammenfallen des porösen Rußkörpers (102) zur Ausbildung einer Vorform (103) aus massivem Glas.

## Revendications

1. Procédé de fabrication d'une préforme (103) en verre solide destinée à être utilisée dans la fabrication de fibre optique monomode à faible teneur en OH, ledit procédé comprenant les étapes suivantes :
oxydation et hydrolyse simultanées des composés de précurseurs formant le verre pour former des matériaux à base de silice poreuse,
mise en rotation d'un élément cylindrique conique creux à une vitesse prédéterminée et dépôt desdits matériaux à base de silice poreuse sur l'élément cylindrique conique creux pour former un corps poreux de suie (102),
détachement de l'élément cylindrique par rapport au corps poreux de suie (102), ce qui se traduit par un corps poreux de suie cylindrique creux (corps poreux de suie),
déshydratation du corps poreux de suie (102) dans un four (110) à l'intérieur d'une plage de température de 1 000 °C à 1 200 °C et
production d'une pression négative à l'intérieur du corps poreux de suie (102) provoquant un frittage et un effondrement simultanés du corps poreux de suie (102) à l'intérieur du même four (110) pour former une préforme en verre solide (103) appropriée pour réaliser une fibre optique.

2. Procédé selon la revendication 1, dans lequel ladite préforme en verre solide (103) est soit étirée directement en fibre optique, soit étirée entre une broche centrale et puis revêtue pour former une préforme pour fibres optiques à partir de laquelle la fibre optique est étirée.

3. Procédé selon la revendication 1, dans lequel ladite vitesse de rotation de l'élément cylindrique pour certaines couches de dépôt initial est de préférence supérieure à 150 tr/min et plus préférablement supérieure à 180 tr/min, et ensuite la vitesse de rotation est réduite de préférence au-dessous de 150 tr/min.

4. Procédé selon la revendication 1, dans lequel lesdits frittage et effondrement dudit corps poreux de suie (102) sont effectués simultanément dans le même four (110) à une température supérieure à 1500°C jusqu'à achèvement complet de l'étape d'effondrement pour former une préforme en verre solide (103).

5. Procédé selon la revendication 4, dans lequel ledit effondrement du corps poreux de suie (102) est accompli par l'utilisation d'un générateur de vide (119) pour générer une pression négative sur un côté de la région creuse du corps poreux de suie (104) et par l'insertion d'un tronc de cône en verre à une autre extrémité dudit corps poreux de suie (102).

6. Procédé selon la revendication 5, dans lequel lesdites étapes du processus de frittage et d'effondrement sont accomplies par l'utilisation d'un appareil de mécanisme de scellement pour maintenir la pression négative requise à l'intérieur de la région creuse du corps poreux de suie (104).

7. Procédé selon la revendication 6, dans lequel, pendant lesdites étapes de frittage et d'effondrement, ledit corps poreux de suie (102) est mis en rotation à une vitesse prédéterminée.

8. Procédé selon la revendication 1, lesdits frittage et effondrement du corps poreux de suie (102) comprenant les étapes suivantes :
insertion d'un tronc de cône en verre à une extrémité du corps poreux de suie (102),
chauffage du corps poreux de suie (102) au-dessus de 1 500°C,
mise en rotation du corps poreux de suie (102) à une vitesse prédéterminée,
raccordement d'un générateur de vide (119) à une autre extrémité du corps poreux de suie (102),
production d'une pression négative nécessaire à l'intérieur du corps poreux de suie (102),
insertion dudit corps poreux de suie (102) à l'intérieur de la zone chaude du four de chauffage (110) à une vitesse descendante prédéterminée et
effondrement dudit corps poreux de suie (102) pour former une préforme en verre solide (103).
